# EUROPEAN PATENT APPLICATION

(11) **EP 3 355 651 A1**
(43) Date of publication of application: **01.08.2018**
(21) Application number: 16848847.6
(22) Date of filing: 09.09.2016
(51) Int. Cl.: H04W 76/02, H04W 88/08, H04W 92/20

(54) **METHOD AND DEVICE FOR BASE STATION SUPPORTING RAN SHARING**

(30) Priority: 22.09.2015 US 201562222162 P
(71) Applicant: LG Electronics Inc., Yeongdeungpo-gu Seoul 07336 (KR)
(72) Inventor: BYUN, Daewook, Seoul 06772 (KR); XU, Jian, Seoul 06772 (KR)
(74) Representative: Cabinet Plasseraud
(86) International application number: PCT/KR2016/010150
(87) International publication number: WO 2017/052121

(57) **Abstract**

Provided are a method for a base station supporting radio access network (RAN) sharing in a wireless communication system, and a device supporting same. The base station comprises transmitting a WLAN termination (WT) addition request message to a WT, wherein the WT addition request message may comprise a serving public land mobile network identity (PLMN ID).

## Description

### BACKGROUND OF THE INVENTION

### Field of the invention

The present invention relates to a wireless communication system, and more particularly, to a method of supporting radio access network (RAN) sharing by a base station in the wireless communication system, and an apparatus supporting the method.

### Related Art

3GPP (3rd Generation Partnership Project) LTE (Long Term Evolution) that is an advancement of UMTS (Universal Mobile Telecommunication System) is being introduced with 3GPP release 8. In 3GPP LTE, OFDMA (orthogonal frequency division multiple access) is used for downlink, and SC-FDMA (single carrier-frequency division multiple access) is used for uplink. The 3GPP LTE adopts MIMO (multiple input multiple output) having maximum four antennas. Recently, a discussion of 3GPP LTE-A (LTE-Advanced) which is the evolution of the 3GPP LTE is in progress.

A wireless communication system may provide a service to a UE through a plurality of access networks. The UE may receive a service from a 3GPP access network such as a mobile wireless communication system. Further, the UE may receive the service from a non-3GPP access network such as WiMAX (Worldwide Interoperability for Microwave Access) or a WLAN (Wireless Local Area Network).

Generally, the UE may establish connection with a 3GPP access network to receive the service. Meanwhile, when traffic overload is generated in a 3GPP access network, if traffic to be processed by the UE is processed by another access network, that is, the non-3GPP access network, the whole efficiency of the network may be improved. As described above, changeable process of the traffic through the 3GPP access network and/or the non-GPP access network refers to traffic steering so that the traffic is changeably processed through a 3GPP access network and/or a non-GPP access network.

For the traffic steering, a policy for interworking of the 3GPP access network and/or the non-GPP access network such as ANDSF (Access Network Discovery and Selection Functions) may be configured in the UE. The above policy is managed independently from an interworking policy configured by the network.

### SUMMARY OF THE INVENTION

There may be a scenario in which a radio access network (RAN) is shared between different operators. In the above scenario in which the RAN is mutually shared, each operator may desire to allocate a preferential radio resource to a customer of the operator. However, a WLAN termination (WT) including a plurality of access points (APs) cannot know a specific operator providing a service to a terminal. Accordingly, there is a need to propose a procedure in which a base station provides the WT with a serving public land mobile network identity (PLMN ID) for LTE-WLAN aggregation (LWA).

According to an embodiment, there is provided a method of supporting RAN sharing by a base station in a wireless communication system. The base station may transmit a WT addition request message to a WT. The WT addition request message may include a serving PLMN ID.

The base station may receive at least one PLMN ID from the WT. The at least one PLMN ID may be received through an Xw setup response message. The serving PLMN ID may be one PLMN ID selected from the at least one PLMN ID.

If the WT addition request message includes the serving PLMN ID, the serving PLMN ID may be used by the WT to manage a radio resource of the WT.

If the WT addition request message includes the serving PLMN ID, the serving PLMN ID may be used by the WT to allocate a resource for LWA.

The base station may receive a WT addition request acknowledge message from the WT in response to the WT addition request message.

According to another embodiment, there is provided a method of supporting RAN sharing by a base station in a wireless communication system. The base station may transmit a WT modification request message to a WT. The WT modification request message may include a serving PLMN ID.

The base station may receive at least one PLMN ID from the WT. The at least one PLMN ID may be received through an Xw setup response message. The serving PLMN ID may be one PLMN ID selected from the at least one PLMN ID.

If the WT modification request message may include the serving PLMN ID, the serving PLMN ID is used by the WT to manage a radio resource of the WT.

If the WT modification request message includes the serving PLMN ID, the serving PLMN ID may be used by the WT to allocate a resource for LWA.

The base station may receive a WT modification request acknowledge message from the WT in response to the WT modification request message.

According to another embodiment, there is provided a base station for supporting RAN sharing in a wireless communication system. The base station may include: a memory; a transceiver; and a processor coupling the memory and the transceiver. The processor may be configured to allow the transceiver to transmit a WT addition request message to a WT. The WT addition request message may include a serving PLMN ID.

An operator may perform radio resource management in an RAN sharing environment.

### BRIEF DESCRIPTION OF THE DRAWINGS

FIG. 1 shows LTE system architecture.
FIG. 2 shows a control plane of a radio interface protocol of an LTE system.
FIG. 3 shows a user plane of a radio interface protocol of an LTE system.
FIG. 4 shows the structure of a wireless local area network (WLAN)
FIG. 5 shows an LWA structure.
FIG. 6 shows a WT addition preparation procedure.
FIG. 7 shows a WT modification preparation procedure.
FIG. 8 shows a WT arrangement structure.
FIG. 9 shows a method of transmitting a serving PLMN ID by an eNB by using a WT additional preparation procedure according to an embodiment of the present invention.
FIG. 10 shows a method in which an eNB transmits a serving PLMN ID by using a WT modification preparation according to an embodiment of the present invention.
FIG. 11 shows an example of allocating a radio resource based on a serving PLMN ID in an RAN sharing environment according to an embodiment of the present invention.
FIG. 12 is a block diagram showing a method in which an eNB supports RAN sharing according to an embodiment of the present invention.
FIG. 13 is a block diagram showing a method in which an eNB supports RAN sharing according to an embodiment of the present invention.
FIG. 14 is a block diagram illustrating a wireless communication system according to the embodiment of the present invention.

### DESCRIPTION OF EXEMPLARY EMBODIMENTS

The technology described below can be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA can be implemented with a radio technology such as universal terrestrial radio access (UTRA) or CDMA-2000. The TDMA can be implemented with a radio technology such as global system for mobile communications (GSM)/general packet ratio service (GPRS)/enhanced data rate for GSM evolution (EDGE). The OFDMA can be implemented with a radio technology such as institute of electrical and electronics engineers (IEEE) 802.11 (Wi-Fi), IEEE 802.16 (WiMAX), IEEE 802.20, evolved UTRA (E-UTRA), etc. IEEE 802.16m is evolved from IEEE 802.16e, and provides backward compatibility with a system based on the IEEE 802.16e. The UTRA is a part of a universal mobile telecommunication system (UMTS). 3rd generation partnership project (3GPP) long term evolution (LTE) is a part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

For clarity, the following description will focus on LTE-A. However, technical features of the present invention are not limited thereto.

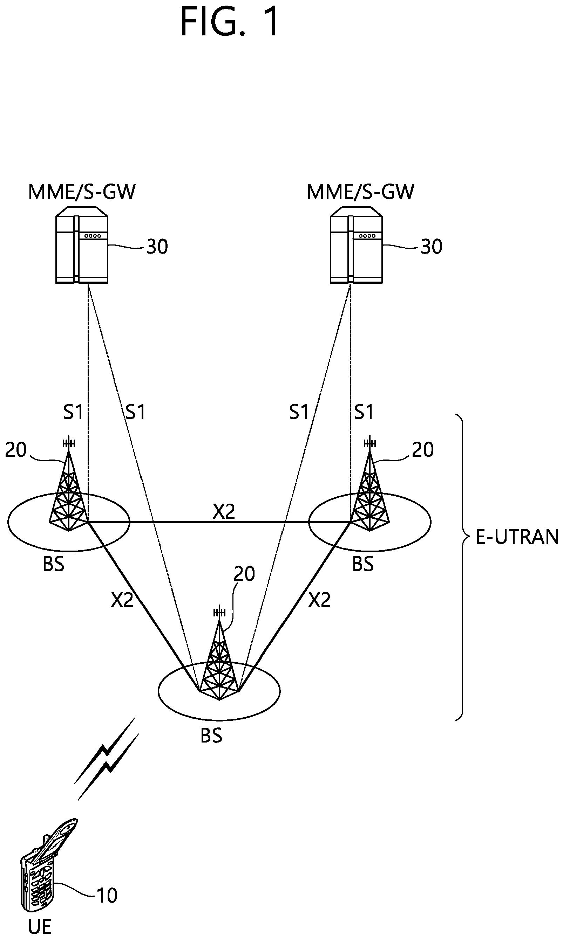

FIG. 1 shows LTE system architecture. The communication network is widely deployed to provide a variety of communication services such as voice over internet protocol (VoIP) through IMS and packet data.

Referring to FIG. 1, the LTE system architecture includes one or more user equipment (UE; 10), an evolved-UMTS terrestrial radio access network (E-UTRAN) and an evolved packet core (EPC). The UE 10 refers to a communication equipment carried by a user. The UE 10 may be fixed or mobile, and may be referred to as another terminology, such as a mobile station (MS), a user terminal (UT), a subscriber station (SS), a wireless device, etc.

The E-UTRAN includes one or more evolved node-B (eNB) 20, and a plurality of UEs may be located in one cell. The eNB 20 provides an end point of a control plane and a user plane to the UE 10. The eNB 20 is generally a fixed station that communicates with the UE 10 and may be referred to as another terminology, such as a base station (BS), a base transceiver system (BTS), an access point, etc. One eNB 20 may be deployed per cell. There are one or more cells within the coverage of the eNB 20. A single cell is configured to have one of bandwidths selected from 1.25, 2.5, 5, 10, and 20 MHz, etc., and provides downlink or uplink transmission services to several UEs. In this case, different cells can be configured to provide different bandwidths.

Hereinafter, a downlink (DL) denotes communication from the eNB 20 to the UE 10, and an uplink (UL) denotes communication from the UE 10 to the eNB 20. In the DL, a transmitter may be a part of the eNB 20, and a receiver may be a part of the UE 10. In the UL, the transmitter may be a part of the UE 10, and the receiver may be a part of the eNB 20.

The EPC includes a mobility management entity (MME) which is in charge of control plane functions, and a system architecture evolution (SAE) gateway (S-GW) which is in charge of user plane functions. The MME/S-GW 30 may be positioned at the end of the network and connected to an external network. The MME has UE access information or UE capability information, and such information may be primarily used in UE mobility management. The S-GW is a gateway of which an endpoint is an E-UTRAN. The MME/S-GW 30 provides an end point of a session and mobility management function for the UE 10. The EPC may further include a packet data network (PDN) gateway (PDN-GW). The PDN-GW is a gateway of which an endpoint is a PDN.

The MME provides various functions including non-access stratum (NAS) signaling to eNBs 20, NAS signaling security, access stratum (AS) security control, Inter core network (CN) node signaling for mobility between 3GPP access networks, idle mode UE reachability (including control and execution of paging retransmission), tracking area list management (for UE in idle and active mode), P-GW and S-GW selection, MME selection for handovers with MME change, serving GPRS support node (SGSN) selection for handovers to 2G or 3G 3GPP access networks, roaming, authentication, bearer management functions including dedicated bearer establishment, support for public warning system (PWS) (which includes earthquake and tsunami warning system (ETWS) and commercial mobile alert system (CMAS)) message transmission. The S-GW host provides assorted functions including per-user based packet filtering (by e.g., deep packet inspection), lawful interception, UE Internet protocol (IP) address allocation, transport level packet marking in the DL, UL and DL service level charging, gating and rate enforcement, DL rate enforcement based on APN-AMBR. For clarity MME/S-GW 30 will be referred to herein simply as a "gateway," but it is understood that this entity includes both the MME and S-GW.

Interfaces for transmitting user traffic or control traffic may be used. The UE 10 and the eNB 20 are connected by means of a Uu interface. The eNBs 20 are interconnected by means of an X2 interface. Neighboring eNBs may have a meshed network structure that has the X2 interface. The eNBs 20 are connected to the EPC by means of an S1 interface. The eNBs 20 are connected to the MME by means of an S1-MME interface, and are connected to the S-GW by means of S1-U interface. The S1 interface supports a many-to-many relation between the eNB 20 and the MME/S-GW.

The eNB 20 may perform functions of selection for gateway 30, routing toward the gateway 30 during a radio resource control (RRC) activation, scheduling and transmitting of paging messages, scheduling and transmitting of broadcast channel (BCH) information, dynamic allocation of resources to the UEs 10 in both UL and DL, configuration and provisioning of eNB measurements, radio bearer control, radio admission control (RAC), and connection mobility control in LTE_ACTIVE state. In the EPC, and as noted above, gateway 30 may perform functions of paging origination, LTE_IDLE state management, ciphering of the user plane, SAE bearer control, and ciphering and integrity protection of NAS signaling.

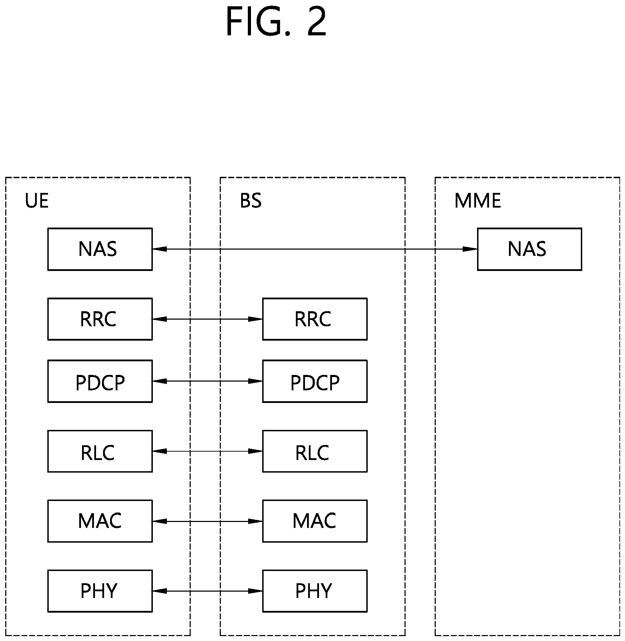

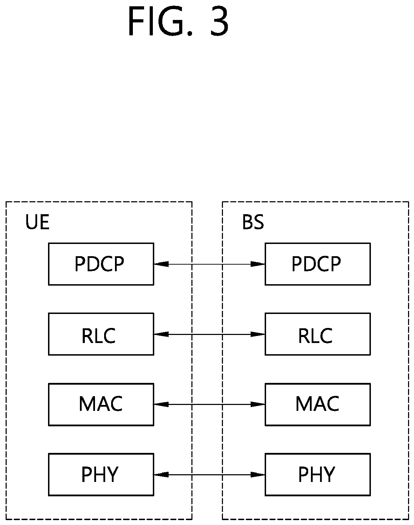

FIG. 2 shows a control plane of a radio interface protocol of an LTE system. FIG. 3 shows a user plane of a radio interface protocol of an LTE system.

Layers of a radio interface protocol between the UE and the E-UTRAN may be classified into a first layer (L1), a second layer (L2), and a third layer (L3) based on the lower three layers of the open system interconnection (OSI) model that is well-known in the communication system. The radio interface protocol between the UE and the E-UTRAN may be horizontally divided into a physical layer, a data link layer, and a network layer, and may be vertically divided into a control plane (C-plane) which is a protocol stack for control signal transmission and a user plane (U-plane) which is a protocol stack for data information transmission. The layers of the radio interface protocol exist in pairs at the UE and the E-UTRAN, and are in charge of data transmission of the Uu interface.

A physical (PHY) layer belongs to the L1. The PHY layer provides a higher layer with an information transfer service through a physical channel. The PHY layer is connected to a medium access control (MAC) layer, which is a higher layer of the PHY layer, through a transport channel. A physical channel is mapped to the transport channel. Data is transferred between the MAC layer and the PHY layer through the transport channel. Between different PHY layers, i.e., a PHY layer of a transmitter and a PHY layer of a receiver, data is transferred through the physical channel using radio resources. The physical channel is modulated using an orthogonal frequency division multiplexing (OFDM) scheme, and utilizes time and frequency as a radio resource.

The PHY layer uses several physical control channels. A physical downlink control channel (PDCCH) reports to a UE about resource allocation of a paging channel (PCH) and a downlink shared channel (DL-SCH), and hybrid automatic repeat request (HARQ) information related to the DL-SCH. The PDCCH may carry a UL grant for reporting to the UE about resource allocation of UL transmission. A physical control format indicator channel (PCFICH) reports the number of OFDM symbols used for PDCCHs to the UE, and is transmitted in every subframe. A physical hybrid ARQ indicator channel (PHICH) carries an HARQ acknowledgement (ACK)/non-acknowledgement (NACK) signal in response to UL transmission. A physical uplink control channel (PUCCH) carries UL control information such as HARQ ACK/NACK for DL transmission, scheduling request, and CQI. A physical uplink shared channel (PUSCH) carries a UL-uplink shared channel (SCH).

A physical channel consists of a plurality of subframes in time domain and a plurality of subcarriers in frequency domain. One subframe consists of a plurality of symbols in the time domain. One subframe consists of a plurality of resource blocks (RBs). One RB consists of a plurality of symbols and a plurality of subcarriers. In addition, each subframe may use specific subcarriers of specific symbols of a corresponding subframe for a PDCCH. For example, a first symbol of the subframe may be used for the PDCCH. The PDCCH carries dynamic allocated resources, such as a physical resource block (PRB) and modulation and coding scheme (MCS). A transmission time interval (TTI) which is a unit time for data transmission may be equal to a length of one subframe. The length of one subframe may be 1 ms.

The transport channel is classified into a common transport channel and a dedicated transport channel according to whether the channel is shared or not. A DL transport channel for transmitting data from the network to the UE includes a broadcast channel (BCH) for transmitting system information, a paging channel (PCH) for transmitting a paging message, a DL-SCH for transmitting user traffic or control signals, etc. The DL-SCH supports HARQ, dynamic link adaptation by varying the modulation, coding and transmit power, and both dynamic and semi-static resource allocation. The DL-SCH also may enable broadcast in the entire cell and the use of beamforming. The system information carries one or more system information blocks. All system information blocks may be transmitted with the same periodicity. Traffic or control signals of a multimedia broadcast/multicast service (MBMS) may be transmitted through the DL-SCH or a multicast channel (MCH).

A UL transport channel for transmitting data from the UE to the network includes a random access channel (RACH) for transmitting an initial control message, a UL-SCH for transmitting user traffic or control signals, etc. The UL-SCH supports HARQ and dynamic link adaptation by varying the transmit power and potentially modulation and coding. The UL-SCH also may enable the use of beamforming. The RACH is normally used for initial access to a cell.

A MAC layer belongs to the L2. The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. A MAC sublayer provides data transfer services on logical channels.

The logical channels are classified into control channels for transferring control plane information and traffic channels for transferring user plane information, according to a type of transmitted information. That is, a set of logical channel types is defined for different data transfer services offered by the MAC layer. The logical channels are located above the transport channel, and are mapped to the transport channels.

The control channels are used for transfer of control plane information only. The control channels provided by the MAC layer include a broadcast control channel (BCCH), a paging control channel (PCCH), a common control channel (CCCH), a multicast control channel (MCCH) and a dedicated control channel (DCCH). The BCCH is a downlink channel for broadcasting system control information. The PCCH is a downlink channel that transfers paging information and is used when the network does not know the location cell of a UE. The CCCH is used by UEs having no RRC connection with the network. The MCCH is a point-to-multipoint downlink channel used for transmitting MBMS control information from the network to a UE. The DCCH is a point-to-point bi-directional channel used by UEs having an RRC connection that transmits dedicated control information between a UE and the network.

Traffic channels are used for the transfer of user plane information only. The traffic channels provided by the MAC layer include a dedicated traffic channel (DTCH) and a multicast traffic channel (MTCH). The DTCH is a point-to-point channel, dedicated to one UE for the transfer of user information and can exist in both uplink and downlink. The MTCH is a point-to-multipoint downlink channel for transmitting traffic data from the network to the UE.

Uplink connections between logical channels and transport channels include the DCCH that can be mapped to the UL-SCH, the DTCH that can be mapped to the UL-SCH and the CCCH that can be mapped to the UL-SCH. Downlink connections between logical channels and transport channels include the BCCH that can be mapped to the BCH or DL-SCH, the PCCH that can be mapped to the PCH, the DCCH that can be mapped to the DL-SCH, and the DTCH that can be mapped to the DL-SCH, the MCCH that can be mapped to the MCH, and the MTCH that can be mapped to the MCH.

An RLC layer belongs to the L2. The RLC layer provides a function of adjusting a size of data, so as to be suitable for a lower layer to transmit the data, by concatenating and segmenting the data received from an upper layer in a radio section. In addition, to ensure a variety of quality of service (QoS) required by a radio bearer (RB), the RLC layer provides three operation modes, i.e., a transparent mode (TM), an unacknowledged mode (UM), and an acknowledged mode (AM). The AM RLC provides a retransmission function through an automatic repeat request (ARQ) for reliable data transmission. Meanwhile, a function of the RLC layer may be implemented with a functional block inside the MAC layer. In this case, the RLC layer may not exist.

A packet data convergence protocol (PDCP) layer belongs to the L2. The PDCP layer provides a function of header compression function that reduces unnecessary control information such that data being transmitted by employing IP packets, such as IPv4 or IPv6, can be efficiently transmitted over a radio interface that has a relatively small bandwidth. The header compression increases transmission efficiency in the radio section by transmitting only necessary information in a header of the data. In addition, the PDCP layer provides a function of security. The function of security includes ciphering which prevents inspection of third parties, and integrity protection which prevents data manipulation of third parties.

A radio resource control (RRC) layer belongs to the L3. The RLC layer is located at the lowest portion of the L3, and is only defined in the control plane. The RRC layer takes a role of controlling a radio resource between the UE and the network. For this, the UE and the network exchange an RRC message through the RRC layer. The RRC layer controls logical channels, transport channels, and physical channels in relation to the configuration, reconfiguration, and release of RBs. An RB is a logical path provided by the L1 and L2 for data delivery between the UE and the network. That is, the RB signifies a service provided the L2 for data transmission between the UE and E-UTRAN. The configuration of the RB implies a process for specifying a radio protocol layer and channel properties to provide a particular service and for determining respective detailed parameters and operations. The RB is classified into two types, i.e., a signaling RB (SRB) and a data RB (DRB). The SRB is used as a path for transmitting an RRC message in the control plane. The DRB is used as a path for transmitting user data in the user plane.

A Non-Access Stratum (NAS) layer placed over the RRC layer performs functions, such as session management and mobility management.

Referring to FIG. 2, the RLC and MAC layers (terminated in the eNB on the network side) may perform functions such as scheduling, automatic repeat request (ARQ), and hybrid automatic repeat request (HARQ). The RRC layer (terminated in the eNB on the network side) may perform functions such as broadcasting, paging, RRC connection management, RB control, mobility functions, and UE measurement reporting and controlling. The NAS control protocol (terminated in the MME of gateway on the network side) may perform functions such as a SAE bearer management, authentication, LTE_IDLE mobility handling, paging origination in LTE_IDLE, and security control for the signaling between the gateway and UE.

Referring to FIG. 3, the RLC and MAC layers (terminated in the eNB on the network side) may perform the same functions for the control plane. The PDCP layer (terminated in the eNB on the network side) may perform the user plane functions such as header compression, integrity protection, and ciphering.

### Hereinafter, An RRC state of a UE and RRC connection procedure are described.

An RRC state indicates whether an RRC layer of the UE is logically connected to an RRC layer of the E-UTRAN. The RRC state may be divided into two different states such as an RRC connected state and an RRC idle state. When an RRC connection is established between the RRC layer of the UE and the RRC layer of the E-UTRAN, the UE is in RRC_CONNECTED, and otherwise the UE is in RRC_IDLE. Since the UE in RRC_CONNECTED has the RRC connection established with the E-UTRAN, the E-UTRAN may recognize the existence of the UE in RRC_CONNECTED and may effectively control the UE. Meanwhile, the UE in RRC_IDLE may not be recognized by the E-UTRAN, and a CN manages the UE in unit of a TA which is a larger area than a cell. That is, only the existence of the UE in RRC_IDLE is recognized in unit of a large area, and the UE must transition to RRC_CONNECTED to receive a typical mobile communication service such as voice or data communication.

In RRC_IDLE state, the UE may receive broadcasts of system information and paging information while the UE specifies a discontinuous reception (DRX) configured by NAS, and the UE has been allocated an identification (ID) which uniquely identifies the UE in a tracking area and may perform public land mobile network (PLMN) selection and cell reselection. Also, in RRC_IDLE state, no RRC context is stored in the eNB.

In RRC_CONNECTED state, the UE has an E-UTRAN RRC connection and a context in the E-UTRAN, such that transmitting and/or receiving data to/from the eNB becomes possible. Also, the UE can report channel quality information and feedback information to the eNB. In RRC_CONNECTED state, the E-UTRAN knows the cell to which the UE belongs. Therefore, the network can transmit and/or receive data to/from UE, the network can control mobility (handover and inter-radio access technologies (RAT) cell change order to GSM EDGE radio access network (GERAN) with network assisted cell change (NACC)) of the UE, and the network can perform cell measurements for a neighboring cell.

In RRC_IDLE state, the UE specifies the paging DRX cycle. Specifically, the UE monitors a paging signal at a specific paging occasion of every UE specific paging DRX cycle. The paging occasion is a time interval during which a paging signal is transmitted. The UE has its own paging occasion.

A paging message is transmitted over all cells belonging to the same tracking area. If the UE moves from one TA to another TA, the UE will send a tracking area update (TAU) message to the network to update its location.

When the user initially powers on the UE, the UE first searches for a proper cell and then remains in RRC_IDLE in the cell. When there is a need to establish an RRC connection, the UE which remains in RRC_IDLE establishes the RRC connection with the RRC of the E-UTRAN through an RRC connection procedure and then may transition to RRC_CONNECTED. The UE which remains in RRC_IDLE may need to establish the RRC connection with the E-UTRAN when uplink data transmission is necessary due to a user's call attempt or the like or when there is a need to transmit a response message upon receiving a paging message from the E-UTRAN.

To manage mobility of the UE in the NAS layer, two states are defined, i.e., an EPS mobility management-REGISTERED (EMM-REGISTERED) state and an EMM-DEREGISTERED state. These two states apply to the UE and the MME. Initially, the UE is in the EMM-DEREGISTERED state. To access a network, the UE performs a process of registering to the network through an initial attach procedure. If the attach procedure is successfully performed, the UE and the MME enter the EMM-REGISTERED state.

To manage a signaling connection between the UE and the EPC, two states are defined, i.e., an EPS connection management (ECM)-IDLE state and an ECM-CONNECTED state. These two states apply to the UE and the MME. When the UE in the ECM-IDLE state establishes an RRC connection with the E-UTRAN, the UE enters the ECM-CONNECTED state. When the MME in the ECM-IDLE state establishes an S1 connection with the E-UTRAN, the MME enters the ECM-CONNECTED state. When the UE is in the ECM-IDLE state, the E-UTRAN does not have context information of the UE. Therefore, the UE in the ECM-IDLE state performs a UE-based mobility related procedure such as cell selection or reselection without having to receive a command of the network. On the other hand, when the UE is in the ECM-CONNECTED state, mobility of the UE is managed by the command of the network. If a location of the UE in the ECM-IDLE state becomes different from a location known to the network, the UE reports the location of the UE to the network through a tracking area update procedure.

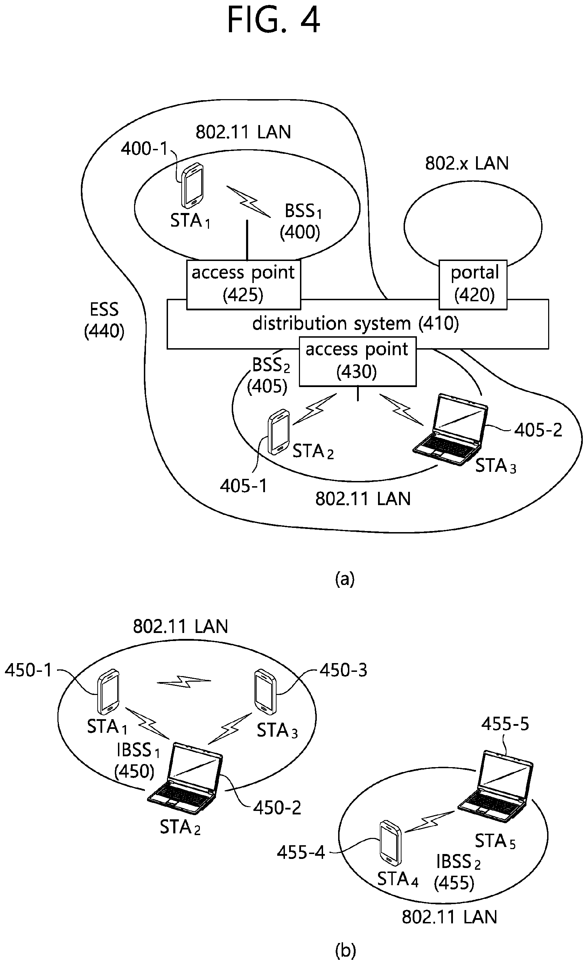

FIG. 4 shows the structure of a wireless local area network (WLAN). FIG. 4(a) illustrates the structure of an infrastructure network of Institute of Electrical and Electronics Engineers (IEEE) 802.11. FIG. 4(b) illustrates an independent BSS.

Referring the FIG. 4(a), a WLAN system may include one or more basic service sets (BSSs) 400 and 405. The BSSs 400 and 405 are a set of an access point (AP) and a station (STA), such as an AP 425 and STA1 400-1, which are successfully synchronized to communicate with each other, and are not a concept indicating a specific region. The BSS 405 may include one AP 430 and one or more STAs 405-1 and 405-2 that may be connected to the AP 430.

An infrastructure BSS may include at least one STA, APs 425 and 430 providing a distribution service, and a distribution system (DS) 410 connecting a plurality of APs.

The distribution system 410 may configure an extended service set (ESS) 440 by connecting a plurality of BSSs 400 and 405. The ESS 440 may be used as a term indicating one network configured by connecting one or more APs 425 or 430 through the distribution system 410. APs included in one ESS 440 may have the same service set identification (SSID).

A portal 420 may serve as a bridge that connects the WLAN (IEEE 802.11) and another network (for example, 802.X).

In the infrastructure network illustrated in the FIG. 4(a), a network between the APs 425 and 430 and a network between the APs 425 and 430 and the STAs 400-1, 405-1, and 405-2 may be configured. However, it is possible to configure a network between STAs in the absence of the APs 425 and 430 to perform communication. A network configured between STAs in the absence of the APs 425 and 430 to perform communication is defined as an ad hoc network or independent basic service set (BSS).

Referring to FIG. 4(b), an independent BSS (IBSS) is a BSS that operates in an ad hoc mode. The IBSS includes no AP and thus has no centralized management entity that performs a management function at the center. That is, in the IBSS, STAs 450-1, 450-2, 450-3, 455-4, and 455-5 are managed in a distributed manner. In the IBSS, all STAs 450-1, 450-2, 450-3, 455-4, and 455-5 may be mobile STAs. Further, the STAs are not allowed to access the DS and thus establish a self-contained network.

An STA is a functional medium including medium access control (MAC) and a physical layer interface for a radio medium according to IEEE 802.11 specifications and may be used to broadly mean both an AP and a non-AP STA.

An STA may also be referred to as various names, such as a mobile terminal, a wireless device, a wireless transmit/receive unit (WTRU), user equipment (UE), a mobile station (MS), a mobile subscriber unit, or simply a user.

A technique for boosting an LTE speed by using an unlicensed WLAN band is being standardized in 3GPP.

### Hereinafter, LTE-U/LAA(LTE in Unlicensed/LTE Assisted Access) will be described.

LTE-U/LAA(LTE in Unlicensed/LTE Assisted Access) is a technique for extending a carrier aggregation (CA) of LTE to an unlicensed band. The LTE-U/LAA is similar to carrier aggregation of LTE in a sense that all channels are accessed with LTE, but is differentiated from the carrier aggregation of LTE in a sense that an unlicensed band of 5GHz is used as an operating frequency band. An LTE channel is used as a primary channel, and an unlicensed channel is used as a secondary channel. The secondary channel plays only a role of assisting LTE data transmission, and is not used alone. The unlicensed band may be used in a small-cell environment in general since transmission output strength is limited.

### Hereinafter, LWA(LTE-WLAN Aggregation) is described.

Although an unlicensed band is used in LTE-U/LAA, a UE and a small cell need to be equipped with a new 5GHz LTE hardware to provide a service. Therefore, LWA has been proposed as an alternative to utilize the existing UE and eNB. Similarly to the LTE-U/LAA, the LWA uses the unlicensed band to deliver LTE traffic. On the other hand, unlike in the LTE-U/LAA, the LWA delivers the LTE traffic to a WLAN. Therefore, in case of the LWA, the LTE traffic may be delivered by utilizing a WLAN AP without a 5GHz hardware for LTE. In addition, the WLAN AP may directly use a function (e.g., authentication, security, etc.) of an LTE core network without having to use an additional GW. Further, the LTW does not have an effect on the existing native WLAN AP.

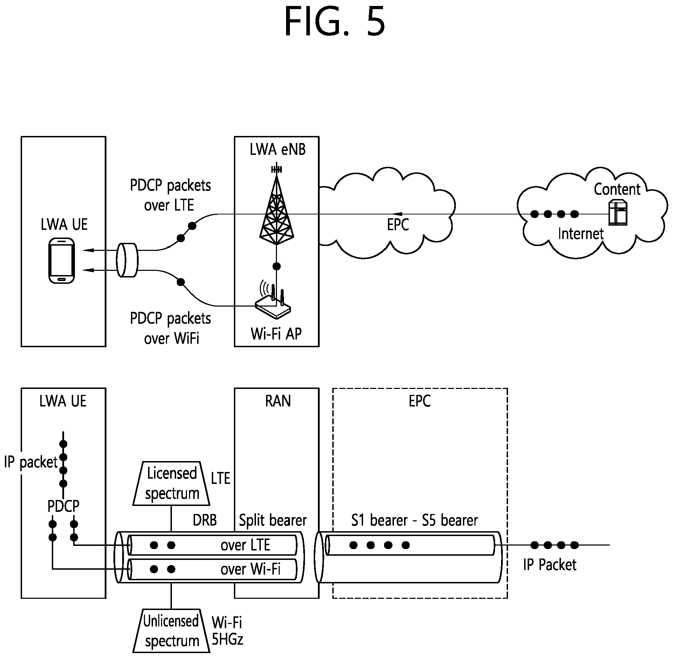

FIG. 5 shows an LWA structure.

Referring to FIG. 5, the LWA structure may consist of an LWA eNB 510, a WLAN AP 520, and a UE 530.
There may be a collocated scenario in which the LWA eNB 510 and the WLAN AP 520 are present together. There may be a non-collocated scenario in which the LWA eNB 510 and the WLAN AP 520 are separated from each other. In the non-collocated scenario, data may be delivered through an IP tunnel. The LWA eNB may schedule a PDCP packet in a PDCP layer and transmit a part thereof to LTE, and may transmit the part thereof by encapsulating it within a WLAN frame through a WLAN AP. The UE may receive LTE traffic together from the LTE and the WLAN, and may combine it in a PDCP layer. The WLAN AP coupled to the LWA eNB may report a WLAN channel state to the LWA eNB, and the LWA eNB may determine whether to operate the WLAN AP through LWA. The LWA eNB may manage a radio resource on a real-time basis according to an RF state and load state of the LTE and WLAN, which may lead to LTE performance improvement. When the WLAN AP does not operate through the LWA, it may operate as a native WLAN AP.

In the LWA, the LTE uses an LTE band, and the WLAN uses a WLAN band. Therefore, unlike in the LTE-U/LAA, there is no fairness or regulation problem between the existing WLAN and LTE. On the other hand, since LTE data must be combined again in the UE after being separated in the eNB, an LWA function needs to be added to the eNB, the WLAN AP, and the UE. In addition, there is a need to newly define an LWA structure, an LWA protocol, and an LWA operation.

An interface between the eNB and the WLAN AP may be defined as Xw. Xw is an interface similar to X2. User data may be delivered through an IP tunnel (GTP tunnel). A control message may be delivered as an Xw-AP message on an SCTP connection. Downlink user traffic may be delivered to LTE and WLAN by being separated in a PDCP layer. In an LTE radio link, a PDCP packet may be transmitted through a data radio bearer (DRB). The eNB may configure an LWA PDU by adding the same DRB ID to the PDCP packet delivered to the WLAN. In addition, the LWA PDU may be delivered to the WLAN AP through the Xw interface. The WLAN AP may allow the LWA PDU to be contained in an 802.11 frame, configures Ethertype=PDCP, and transmits it to the UE through an 802.11 interface. The UE may receive the 802.11 frame, and if Ethertype=PDCP, may send it to an LTE PDCP layer. The PDCP layer may collect, re-order, and combine PDCP packets belonging to the same bearer on the basis of a DRB ID.

### Hereinafter, a WLAN termination (WT) additional preparation procedure will be described.

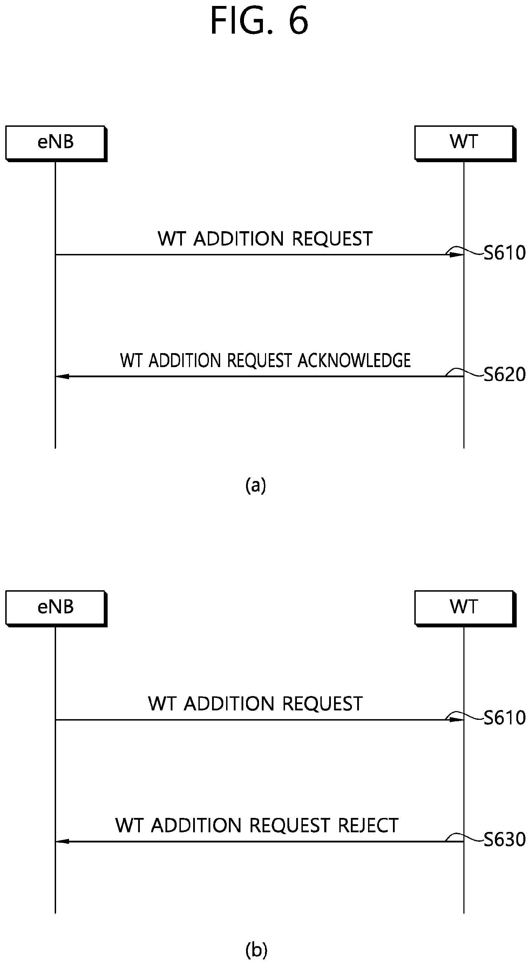

FIG. 6 shows a WT addition preparation procedure. FIG. 6(a) shows a case where the WT additional preparation procedure is successfully performed. FIG. 6(b) shows a case where the WT additional preparation procedure fails.

The purpose of the WT addition preparation procedure is to request a WT to allocate resources for an LWA operation with respect to a specific UE. The WT addition preparation procedure uses UE-associated signalling.

Referring to FIG. 6(a), in step S610, an eNB may initiate the WT additional preparation procedure by transmitting a WT Addition Request message to the WT. When the WT Addition Request message is received, the WT may perform the following operation.
- The WT may use information included in a Mobility Set IE as a WLAN mobility set configured for LWA.
- If WLAN Security Information IE is included, the WT may store it. In addition, the WLAN Security Information IE may be used to establish a necessary security relation for the UE.

In step S620, the eNB may receive a WT Addition Request Acknowledge message from the WT. The WT Addition Request Acknowledge message may include a result of all requested E-RABs. A list of E-RABs which are successfully established may be included in an E-RABs Admitted To Be Added List IE. A list of E-RABs which fail in the establishment may be included in an E-RABs Not Admitted List IE.

Referring to FIG. 6(b), in step S610, the eNB may initiate the WT additional preparation procedure by transmitting a WT Addition Request Message to the WT.

If the WT cannot accept at least any one of bearers during the WT addition preparation or if a failure occurs, in step S630, the WT may transmit a WT Addition Request Reject message to the eNB together with a proper cause value.

### Hereinafter, a WLAN termination (WT) modification preparation procedure will be described.

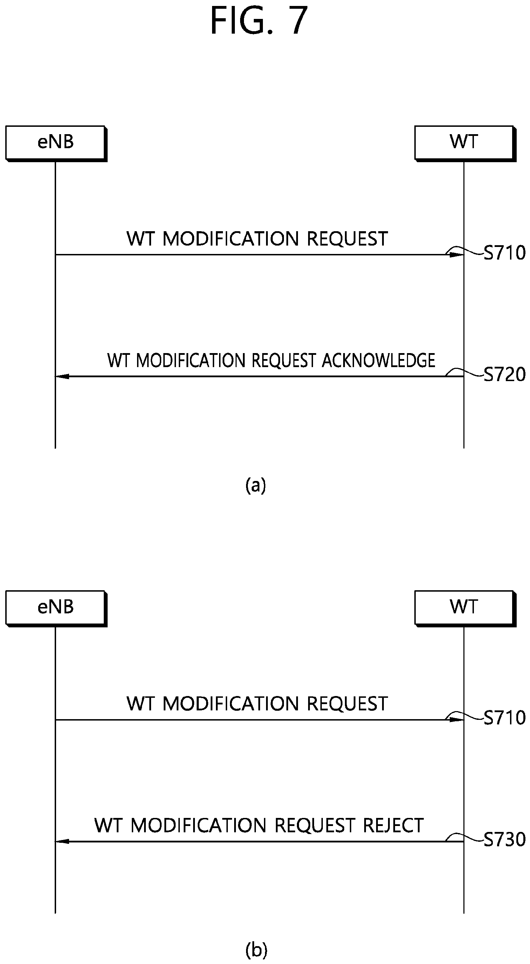

FIG. 7 shows a WT modification preparation procedure. FIG. 7(a) shows a case where the WT modification preparation procedure is successfully performed. FIG. 7(b) shows a case where the WT modification preparation procedure fails.

The WT modification preparation procedure may be used to enable an eNB to request a WT to modify UE context of the WT. The WT modification preparation procedure uses UE-associated signalling.

Referring to FIG. 7(a), in step S710, the eNB may initiate the WT modification preparation procedure by transmitting a WT Modification Request message to the WT. The WT Modification Request message may include an E-RAB to be added. The WT Modification Request message may include an E-RAB to be modified. The WT Modification Request message may include an E-RAB to be released. The WT Modification Request message may include WLAN security information. The WLAN security information may be included in a WLAN Security Information IE.

If the WLAN Security Information IE is included in the WT Modification Request message, the WT may store information included in the WLAN Security Information IE. In addition, the WLAN Security Information IE may be used to establish a necessary security relation for the UE.

If at least any one of the requested modifications is allowed by the WT, the WT may modify a part of related UE context. In addition, in step S720, the WT may transmit a WT Modification Request Acknowledge message to the eNB.

The WT may allow an E-RABs Admitted To Be Added List IE to include an E-RAB for a resource added in the WT. The WT may allow an E-RABs Admitted To Be Modified List IE to include an E-RAB for a resource modified in the WT. The WT may allow an E-RABs Admitted To Be Released List IE to include an E-RAB for a resource released in the WT. The WT may allow an E-RABs Not Admitted List IE to include a non-admitted E-RAB together with a proper cause value.

Referring to FIG. 7(b), in step S710, the eNB may initiate the WT modification preparation procedure by transmitting the WT Modification Request message to the WT.

If the WT does not allow any modification request or if a failure occurs during the WT modification procedure initiated by the eNB, in step S730, the WT may transmit a WT Modification Request Reject message to the eNB. The WT Modification Request Reject message may include a Cause IE having a proper value.

As described above, while a UE in an RRC_CONNECTED state is configured to use an LTE radio resource and a WLAN radio resource, the eNB may support LWA.

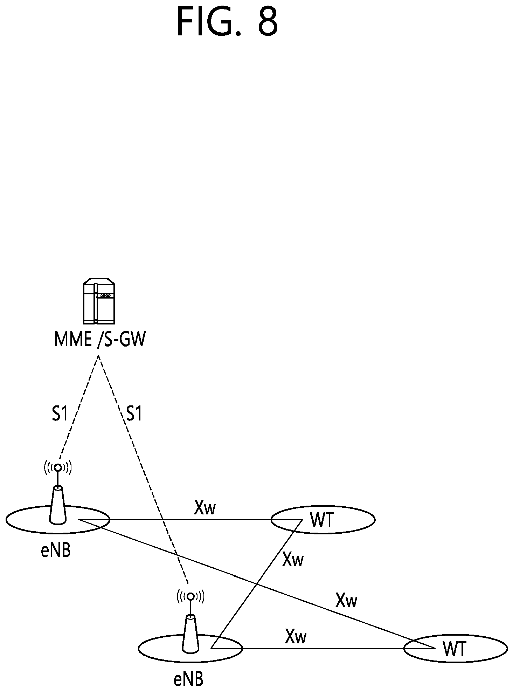

FIG. 8 shows a WT arrangement structure.

Referring to FIG. 8, an eNB and a WLAN termination (WT) may be connected through an Xw interface. The WT may include at least one WLAN AP. The WT is a logical node in which the Xw interface is terminated on a WLAN. The Xw interface may be established through an Xw setup procedure. In an environment in which a WT including a plurality of WLAN APs is arranged, a radio access network (RAN) sharing support may be necessarily considered in an LWA operation.

For example, among the plurality of WLAN APs included in the WT, it is assumed that a first WLAN AP is installed by a first operator, and a second WLAN AP is installed by a second operator. Each operator may desire to provide a service to a UE by sharing the first WLAN AP and the second WLAN AP. However, each operator may desire to allocate a resource preferentially to a customer of the operator. That is, in an RAN sharing environment, the first operator who installs the first WLAN AP may desire to preferentially provide a service to a customer of the first operator through the first WLAN AP, and the second operator who installs the second WLAN AP may desire to preferentially provide a service to a customer of the second operator through the second WLAN AP. The above policy may be further required in a congested RAN sharing environment.

However, the WT cannot know whether a UE which has moved to a region of the WT is a UE to which a service is provided by a certain operator. Therefore, for example, in the RAN sharing environment, it may be difficult for a specific operator to control a UE of the specific operator to have access to a WLAN AP of the specific operator. Accordingly, there is a need to propose a method of providing a serving PLMN ID to the WT, and an apparatus supporting the method.

Hereinafter, a method of providing a serving PLMN ID in an LWA scenario will be described according to an embodiment of the present invention.

When it is determined to add or modify a WT resource, for future mobility (e.g., a proper AP), an eNB may consider access restriction information and roaming for a UE. The eNB may provide the serving PLMN ID to the WT by using a WT addition preparation procedure. Alternatively, the eNB may provide the serving PLMN ID to the WT by using a WT modification preparation procedure.

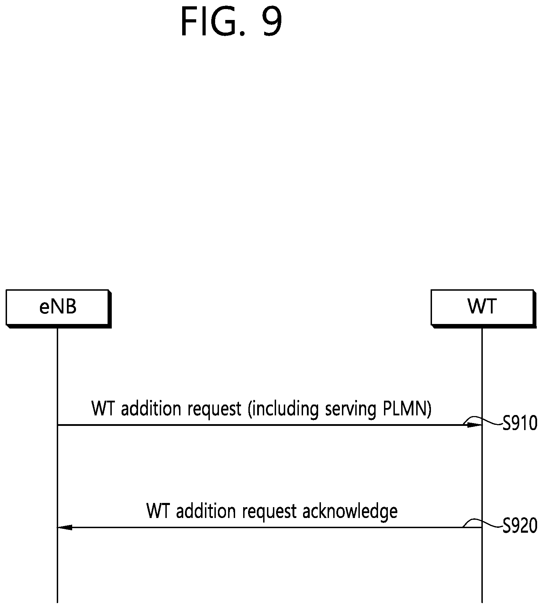

FIG. 9 shows a method of transmitting a serving PLMN ID by an eNB by using a WT additional preparation procedure according to an embodiment of the present invention.

Referring to FIG. 9, in step S 910, the eNB may transmit a serving public land mobile network identity (PLMN ID) to the WT. The serving PLMN ID may be transmitted through a WT additional preparation procedure. The serving PLMN ID may be included in a WT Addition Request message. The WT may include at least one WLAN AP. The WT Addition Request message may be defined by Table 1.

**[Table 1]**

| **IE/Group Name** | **Presence** | **Semantics description** | **Criticality** | **Assigned Criticality** |
|---|---|---|---|---|
| Message Type | M | | YES | reject |
| eNB UE XwAP ID | M | Assigned by the eNB | YES | reject |
| UE Identity | M | | YES | reject |
| WLAN Security Information | O | | YES | reject |
| Serving PLMN | O | The serving PLMN for the UE. | YES | ignore |
| E-RABs To Be Added List | | | YES | reject |
| >E-RABs To Be Added Item | | | EACH | reject |
| >>E-RAB ID | M | | - | - |
| >>E-RAB Level QoS Parameters | M | Includes necessary QoS parameters | - | - |
| >> eNB GTP Tunnel Endpoint | M | Endpoint of the Xw transport bearer at the eNB | - | - |
| Mobility Set | M | | YES | reject |

Referring to Table 1 above, the WT Addition Request message may include a serving PLMN. The serving PLMN may be a serving PLMN for a UE. The serving PLMN and the serving PLMN ID may be used in the same concept. The WT Addition Request message may be a UE-specific message. That is, the WT Addition Request message may be transmitted in a UE specific manner for a specific UE.

The serving PLMN ID may be one PLMN ID selected from at least one PLMN ID. For this, the eNB may receive the at least one PLMN ID from the WT. The at least one PLMN ID may be received from the WT through an Xw setup procedure. The at least one PLMN ID may be included in an Xw Setup Response message. The Xw Setup Response message may be defined by Table 2.

**[Table 2]**

| **IE/Group Name** | **Presence** | **Semantics description** | **Criticality** | **Assigned Criticality** |
|---|---|---|---|---|
| Message Type | M | | YES | reject |
| WT ID | M | | YES | reject |
| WLAN Identifier List | | List of identifiers supported by the WT | YES | reject |
| >WLAN Identifier Item | | | | |
| >>WLAN Information | M | | | |
| Criticality Diagnostics | O | | YES | ignore |

Referring to Table 2 above, the Xw Setup Response message may include a WT ID. The WT ID may be an IE used to distinguish the WT. The WT ID may be defined by Table 3.

**[Table 3]**

| **IE/Group Name** | **Presence** | **Semantics description** |
|---|---|---|
| CHOICE WT ID Type | M | |
| >WT ID Type 1 | | |
| >>PLMN ID | M | |
| >>Short WT ID | M | |
| >WT ID Type 2 | | |

Referring to Table 3 above, the WT ID may include a PLMN ID. That is, the PLMN ID may be transmitted to the eNB by being included in the Xw Setup Response message.

In step S910, the WT may use the received serving PLMN ID for the purpose of managing a radio resource. That is, if the WT Addition Request message includes the serving PLMN ID, the WT may consider the serving PLMN ID in resource allocation for LWA. In addition, in step S920, the WT may transmit a WT Addition Request Acknowledge message to the eNB.

For example, the serving PLMN ID may be used for the purpose of managing the radio resource as follows. The WT may receive the serving PLMN ID, and may compare the received serving PLMN ID with a PLMN ID of a specific WLAN AP included in the WT. If the received serving PLMN ID coincides with the PLMN ID of the specific WLAN AP, the WT may preferentially allocate the radio resource to a UE corresponding to the serving PLMN ID through the specific WLAN AP. Alternatively, the WT may allow the UE corresponding to the serving PLMN ID to have a right to preferentially access the specific WLAN AP. Therefore, in the RAN sharing environment in which a plurality of WLAN APs are shared between operators, the operator may allocate a radio resource preferentially to a customer of the operator according to a policy, or may assign a preferential access right.

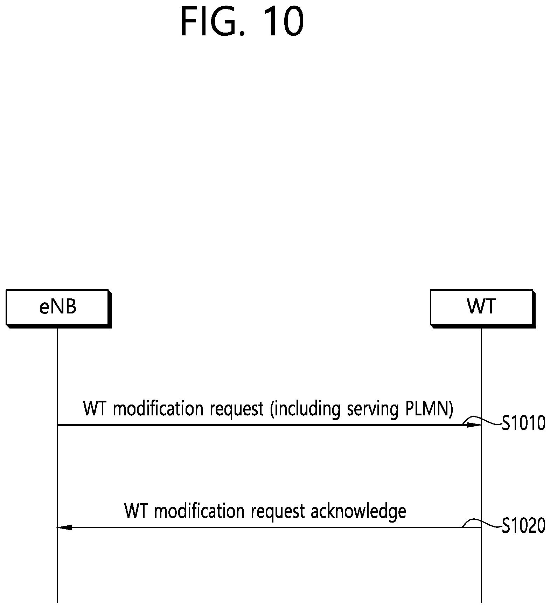

FIG. 10 shows a method in which an eNB transmits a serving PLMN ID by using a WT modification preparation according to an embodiment of the present invention.

Referring to FIG. 10, in step S1010, the eNB may transmit the serving PLMN ID to a WT. The serving PLMN ID may be transmitted through the WT modification preparation procedure. The serving PLMN ID may be included in a WT Modification Request message. The WT may include at least one WLAN AP. The WT Modification Request message may be defined by Table 4.

**[Table 4]**

| **IE/Group Name** | **Presence** | **Semantics description** | **Criticality** | **Assigned Criticality** |
|---|---|---|---|---|
| Message Type | M | | YES | reject |
| eNB UE XwAP ID | M | Assigned by the eNB | YES | reject |
| WT UE XwAP ID | M | Assigned by the WT | YES | reject |
| Cause | M | | YES | ignore |
| Serving PLMN | O | The serving PLMN for the UE. | YES | ignore |
| UE Context Information | | | YES | reject |
| >WLAN Security Information | O | | | |
| >E-RABs To Be Added List | | | - | - |
| >>E-RABs To Be Added Item | | | EACH | ignore |
| >>>E-RAB ID | M | | - | - |
| >>>E-RAB Level QoS Parameters | M | Includes necessary QoS parameters | - | - |
| >>> eNB GTP Tunnel Endpoint | M | Endpoint of the Xw transport bearer at the eNB | - | - |
| >E-RABs To Be Modified List | | | - | - |
| >>E-RABs To Be Modified Item | | | EACH | ignore |
| >>>E-RAB ID | M | | - | - |
| >>>E-RAB Level QoS Parameters | O | Includes QoS parameters to be modified | - | - |
| >>> eNB GTP Tunnel Endpoint | O | Endpoint of the Xw transport bearer at the eNB | - | - |
| >E-RABs To Be Released List | | | - | - |
| >>E-RABs To Be Released Item | | | EACH | ignore |
| >>>E-RAB ID | M | | - | - |
| >>>DL Forwarding GTP Tunnel Endpoint | O | Identifies the Xw transport bearer used for forwarding of DL PDUs | - | - |
| Mobility Set | O | | YES | reject |

Referring to Table 4 above, the WT Modification Request message may include a serving PLMN. The serving PLMN may be a serving PLMN for a UE. The serving PLMN and the serving PLMN ID may be used in the same concept. The WT Modification Request message may be a UE-specific message. That is, the WT Modification Request message may be transmitted in a UE specific manner for a specific UE.

The serving PLMN ID may be one PLMN ID selected from at least one PLMN ID. For this, the eNB may receive the at least one PLMN ID from the WT. The at least one PLMN ID may be received from the WT through an Xw setup procedure. The at least one PLMN ID may be included in an Xw Setup Response message. The Xw Setup Response message may be defined by Table 2 above. Referring to Table 2 above, the Xw Setup Response message may include a WT ID. The WT ID may be an IE used to distinguish the WT. The WT ID may be defined by Table 3 above. Referring to Table 3 above, the WT ID may include a PLMN ID. That is, the PLMN ID may be transmitted to the eNB by being included in the Xw Setup Response message.

In step S1010, the WT may use the received serving PLMN ID for the purpose of managing a radio resource. That is, if the WT Modification Request message includes the serving PLMN ID, the WT may consider the serving PLMN ID in resource allocation for LWA. In addition, in step S1020, the WT may transmit a WT Modification Request Acknowledge message to the eNB. If at least any one of modification requests based on the WT Modification Request message is allowed, the WT Modification Request Acknowledge message may be transmitted to the eNB.

Since the eNB provides the selected serving PLMN ID to the WT, in the RAN sharing environment in which a plurality of WLAN APs are shared between operators, the operator may allocate a radio resource preferentially to a customer of the operator according to a policy, or may assign a preferential access right.

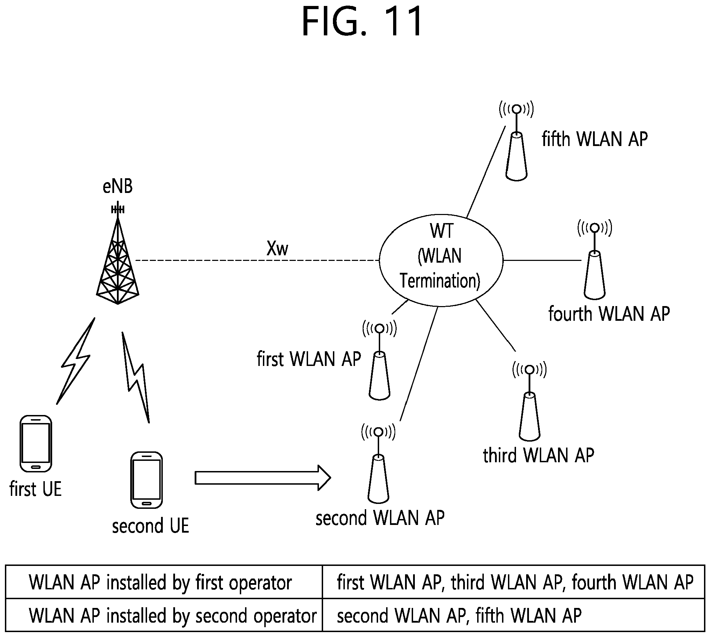

FIG. 11 shows an example of allocating a radio resource based on a serving PLMN ID in an RAN sharing environment according to an embodiment of the present invention.

Referring to FIG. 11, an eNB may be an eNB shared by a first operator and a second operator. A WT may be a WT shared by the first operator and the second operator. That is, the WT may include a WLAN AP of the first operator and a WLAN AP of the second operator. It is assumed that a first WLAN AP, a third WLAN AP, and a fourth WLAN AP are WLAN APs of the first operator. It is assumed that a second WLAN AP and a fifth WLAN AP are WLAN APs of the second operator. It is assumed that a first UE is a UE served by the first operator, and the second UE is a UE served by the second operator. It is assumed that the first UE and the second UE are UEs capable of performing an LWA operation.
(1) An eNB may receive a PLMN ID from a WT. The PLMN ID may be a PLMN ID for a WLAN AP of the first operator and a PLMN ID for a WLAN AP of the second operator.
(2) In case of the first UE, the eNB may select the PLMN ID for the WLAN AP of the first operator, and may transmit the selected PLMN ID to the WT. The selected PLMN ID may be the same concept as the serving PLMN ID. The selected PLMN ID may be included in a WT Addition Request message. The WT Addition Request message may be a UE specific message transmitted for the first UE. The selected PLMN ID may be included in a WT Modification Request message. The WT Modification Request message may be a UE specific message transmitted for the first UE.
   In an RAN sharing environment, the first operator may be configured such that the first UE can preferentially have access to the first WLAN AP, the third WLAN AP, and the fourth WLAN AP in comparison with the second UE. Alternatively, the first operator may be configured such that the first UE can preferentially allocate a radio resource through the first WLAN AP, the third WLAN AP, and the fourth WLAN AP in comparison with the second UE.
(3) In case of the second UE, the eNB may select the PLMN ID for the WLAN AP of the second operator, and may transmit the selected PLMN ID to the WT. The selected PLMN ID may be the same concept as the serving PLMN ID. The selected PLMN ID may be included in a WT Addition Request message. The WT Addition Request message may be a UE specific message transmitted for the second UE. The selected PLMN ID may be included in a WT Modification Request message. The WT Modification Request message may be a UE specific message transmitted for the second UE.

In an RAN sharing environment, the second operator may be configured such that the second UE can preferentially have access to the second WLAN AP and the fifth WLAN AP in comparison with the first UE. Alternatively, the second operator may be configured such that the second UE can preferentially allocate a radio resource through the second WLAN AP and the fifth WLAN AP in comparison with the first UE.

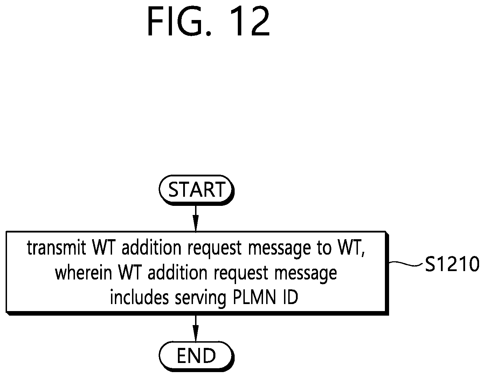

FIG. 12 is a block diagram showing a method in which an eNB supports RAN sharing according to an embodiment of the present invention.

Referring to FIG. 12, in step S1210, the eNB transmits a WT Addition Request message to a WLAN termination (WT). The WT Addition Request message may include a serving public land mobile network identity (PLMN ID).

The eNB may receive at least one PLMN ID from the WT. The at least one PLMN ID may be included in an Xw Setup Response message. The serving PLMN ID may be one PLMN ID selected from the at least one PLMN ID.

If the WT Addition Request message includes the serving PLMN ID, the serving PLMN ID may be used by the WT to manage a radio resource of the WT. If the WT Addition Request message includes the serving PLMN ID, the serving PLMN ID may be used by the WT to allocate a resource for LTE-WLAN aggregation (LWA).

The eNB may receive a WT Addition Request Acknowledge message from the WT in response to the WT Addition Request message.

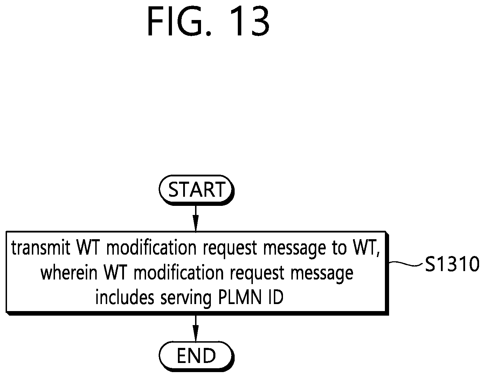

FIG. 13 is a block diagram showing a method in which an eNB supports RAN sharing according to an embodiment of the present invention.

Referring to FIG. 13, in step S1310, the eNB transmits a WT Modification Request message to a WLAN termination (WT). The WT Modification Request message may include a serving public land mobile network identity (PLMN ID).

The eNB may receive at least one PLMN ID from the WT. The at least one PLMN ID may be included in an Xw Setup Response message. The serving PLMN ID may be one PLMN ID selected from the at least one PLMN ID.

If the WT Modification Request message includes the serving PLMN ID, the serving PLMN ID may be used by the WT to manage a radio resource of the WT. If the WT Modification Request message includes the serving PLMN ID, the serving PLMN ID may be used by the WT to allocate a resource for LTE-WLAN aggregation (LWA).

The eNB may receive a WT Modification Request Acknowledge message from the WT in response to the WT Modification Request message.

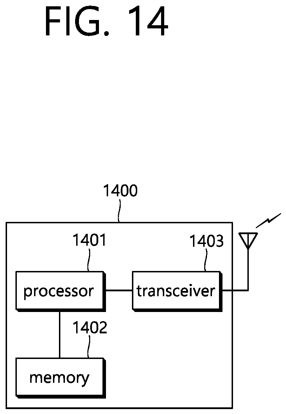

FIG. 14 is a block diagram illustrating a wireless communication system according to the embodiment of the present invention.

A BS 1400 includes a processor 1401, a memory 1402 and a transceiver 1403. The memory 1402 is connected to the processor 1401, and stores various information for driving the processor 1401. The transceiver 1403 is connected to the processor 1401, and transmits and/or receives radio signals. The processor 1401 implements proposed functions, processes and/or methods. In the above embodiment, an operation of the base station may be implemented by the processor 1401.

The processor may include an application-specific integrated circuit (ASIC), a separate chipset, a logic circuit, and/or a data processing unit. The memory may include a read-only memory (ROM), a random access memory (RAM), a flash memory, a memory card, a storage medium, and/or other equivalent storage devices. The transceiver may include a base-band circuit for processing a wireless signal. When the embodiment is implemented in software, the aforementioned methods can be implemented with a module (i.e., process, function, etc.) for performing the aforementioned functions. The module may be stored in the memory and may be performed by the processor. The memory may be located inside or outside the processor, and may be coupled to the processor by using various well-known means.

Various methods based on the present specification have been described by referring to drawings and reference numerals given in the drawings on the basis of the aforementioned examples. Although each method describes multiple steps or blocks in a specific order for convenience of explanation, the invention disclosed in the claims is not limited to the order of the steps or blocks, and each step or block can be implemented in a different order, or can be performed simultaneously with other steps or blocks. In addition, those ordinarily skilled in the art can know that the invention is not limited to each of the steps or blocks, and at least one different step can be added or deleted without departing from the scope and spirit of the invention.

The aforementioned embodiment includes various examples. It should be noted that those ordinarily skilled in the art know that all possible combinations of examples cannot be explained, and also know that various combinations can be derived from the technique of the present specification. Therefore, the protection scope of the invention should be determined by combining various examples described in the detailed explanation, without departing from the scope of the following claims.

## Claims

1. A method of supporting radio access network (RAN) sharing by a base station in a wireless communication system, the method comprising:
transmitting a WLAN termination (WT) addition request message to a WT,
wherein the WT addition request message comprises a serving public land mobile network identity (PLMN ID).

2. The method of claim 1, further comprising:
receiving, by the base station, at least one PLMN ID from the WT.

3. The method of claim 2, wherein the at least one PLMN ID is received through an Xw setup response message.

4. The method of claim 2, wherein the serving PLMN ID is one PLMN ID selected from the at least one PLMN ID.

5. The method of claim 1, wherein if the WT addition request message includes the serving PLMN ID, the serving PLMN ID is used by the WT to manage a radio resource of the WT.

6. The method of claim 1, wherein if the WT addition request message includes the serving PLMN ID, the serving PLMN ID is used by the WT to allocate a resource for LTE-WLAN aggregation (LWA).

7. The method of claim 1, further comprising:
receiving, by the base station, a WT addition request acknowledge message from the WT in response to the WT addition request message.

8. A method of supporting radio access network (RAN) sharing by a base station in a wireless communication system, the method comprising
transmitting a WLAN termination (WT) modification request message to a WT, wherein the WT modification request message comprises a serving public land mobile network identity (PLMN ID).

9. The method of claim 8, further comprising:
receiving, by the base station, at least one PLMN ID from the WT.

10. The method of claim 9, wherein the at least one PLMN ID is received through an Xw setup response message.

11. The method of claim 9, wherein the serving PLMN ID is one PLMN ID selected from the at least one PLMN ID.

12. The method of claim 8, wherein if the WT modification request message includes the serving PLMN ID, the serving PLMN ID is used by the WT to manage a radio resource of the WT.

13. The method of claim 8, wherein if the WT modification request message includes the serving PLMN ID, the serving PLMN ID is used by the WT to allocate a resource for LTE-WLAN aggregation (LWA).

14. The method of claim 8, further comprising:
receiving, by the base station, a WT modification request acknowledge message from the WT in response to the WT modification request message.

15. A base station for supporting radio access network (RAN) sharing in a wireless communication system, the method comprising:
a memory; a transceiver; and a processor coupling the memory and the transceiver,
wherein the processor is configured to allow the transceiver to transmit a WLAN termination (WT) addition request message to a WT, wherein the WT addition request message comprises a serving public land mobile network identity (PLMN ID).
